# FASCICULE DE BREVET EUROPEEN

(11) **EP 1 194 713 B1**
(45) Date de publication et mention de la délivrance du brevet: **03.08.2005**
(21) Numéro de dépôt: 01919533.8
(22) Date de dépôt: 21.03.2001
(51) Int. Cl.: F16L 19/02

(54) **PROCEDE D'ASSEMBLAGE D'UN CONDUIT SUR UN EMBOUT TUBULAIRE RIGIDE AU MOYEN D'UN ECROU VISSE SUR L'EMBOUT, ET RACCORD POUR LA MISE EN OEUVRE DU PROCEDE**
VERFAHREN ZUR VERBINDUNG EINER LEITUNG AUF EINEM STARREN, ROHRFÖRMIGEN STUTZEN, MIT HILFE EINER ÜBERWURFMUTTER UND VERBINDUNG ZUR DURCHFÜHRUNG DIESES VERFAHRENS
METHOD FOR ASSEMBLING A CONDUIT ON A RIGID TUBULAR END PIECE USING A NUT SCREWED ON THE END PIECE, AND COUPLER FITTING THEREFOR

(30) Priorité: 22.03.2000 FR 0003652
(43) Date de publication de la demande: 10.04.2002
(60) Demande divisionnaire: 05075338.3
(73) Titulaire: Benit, Claude, 77230 Dammartin en Goele (FR)
(72) Inventeur: Benit, Claude, 77230 Dammartin en Goele (FR)
(74) Mandataire: Doireau, Marc
(86) Numéro de dépôt international: PCT/FR2001/000837
(87) Numéro de publication internationale: WO 2001/071234

(56) Documents cités:
- EP-A- 0 357 849
- EP-A- 0 945 663
- DE-U- 29 702 078
- US-A- 3 756 632
- US-A- 5 114 190

## Description

L'invention concerne un procédé d'assemblage d'un conduit sur un embout tubulaire rigide au moyen d'un écrou vissé sur l'embout, ainsi qu'un raccord pour la mise en oeuvre du procédé.

Dans un tel procédé d'assemblage où un écrou vient se visser sur un embout fileté pour effectuer le raccordement, il faut assurer une liaison mécanique entre l'écrou qui doit être libre en rotation et le conduit à raccorder sur l'embout. D'une manière générale, et pour assurer cette liaison mécanique, on prévoit une douille métallique qu'il faut sertir sur l'extrémité du conduit. Or, une opération de sertissage nécessite d'avoir recours à un outillage particulier dont l'achat est d'un investissement non négligeable.

Un but de l'invention est de pouvoir s'affranchir de l'utilisation d'un outillage de sertissage, sans pour autant compliquer la structure du raccord.

On connaît des documents DE-297 02 078 et EP-0 945 663, des procédés d'assemblage de type bicône où les deux extrémités d'une bague de verrouillage métallique se déforment sous l'action du vissage d'un écrou pour venir en prise avec le tuyau, et du document US-3,756,632 un procédé d'assemblage utilisant une bague de verrouillage souple qui se déforme sous l'action du vissage d'un écrou.

Un but de l'invention est de proposer des solutions différentes à ces modes de réalisation d'assemblage selon l'art antérieur en considérant le cas d'un tuyau souple ou semi-rigide.

L'invention propose donc un procédé d'assemblage d'un conduit souple ou semi-rigide sur un embout tubulaire rigide au moyen d'un écrou vissé sur l'embout, ce procédé consistant à rapporter une bague métallique autour du conduit et à utiliser l'opération de vissage de l'écrou sur l'embout pour obtenir une solidarisation mécanique irréversible entre la bague et le conduit, qui est caractérisé en ce qu'il consiste à engager un insert à queue de sapin à l'intérieur du conduit, à mettre l'insert en appui sur l'embout, et à faire déplacer la bague par l'écrou au cours de l'opération de vissage pour la forcer à s'engager sur l'insert en emprisonnant fermement le conduit entre la bague et l'insert, la bague ne subissant aucune déformation lors du vissage de l'écrou.

La mise en oeuvre d'un tel procédé ne nécessite donc aucun outillage de sertissage, mais une simple clé pour assurer l'opération de vissage et de dévissage de l'écrou.

L'invention concerne également un raccord pour la mise en oeuvre du procédé.

Les avantages qui en résultent sont bien évidemment de faire l'économie d'un outillage de sertissage, ce qui est loin d'être négligeable du point de vue économique.

Par ailleurs, la mise en oeuvre de ce procédé est simple et ne requiert aucune compétence particulière.

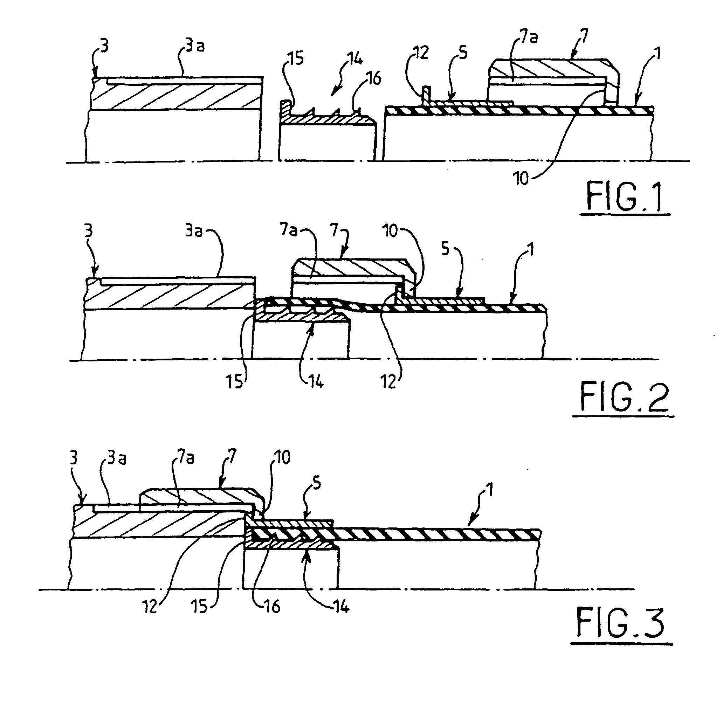

D'autres avantages, caractéristiques et détails de l'invention ressortiront du complément de description qui va suivre en référence à des dessins annexés, donnés uniquement à titre d'exemple et dans lesquels les figures 1 à 3 sont des demi-vues en coupe axiale pour illustrer un exemple de mise en oeuvre du procédé d'assemblage selon l'invention dans le cas d'un conduit souple ou semi-rigide.

Le procédé d'assemblage selon l'invention pour raccorder un conduit 1 sur un embout tubulaire rigide 3 fait notamment intervenir une bague métallique 5 qui est rapportée librement autour du conduit 1, puis solidarisée de manière irréversible avec le conduit 1 au cours de l'opération de vissage d'un écrou 7 sur l'embout tubulaire 3.

D'une manière générale :
- le conduit 1 peut être soit souple ou semi-rigide,
- l'embout 3 présente un filetage 3a sur sa paroi interne,
- la bague 5 présente un diamètre interne supérieur au diamètre externe du conduit 1, et un diamètre externe inférieur au diamètre interne de l'écrou 7, et
- l'écrou 7 présente un taraudage complémentaire 7a sur sa paroi interne pour pouvoir se visser sur l'embout 3, et un épaulement annulaire radialement interne 10 à une extrémité pour coopérer avec une extrémité de la bague 5 au cours de l'opération de vissage.

Sur les figures 1 à 3, le conduit 1 est souple ou semi-rigide, la bague 5 présente une collerette 12 vers une extrémité, et le procédé d'assemblage fait également intervenir un insert métallique rigide 14 qui présente une collerette 15 vers une extrémité et des nervures annulaires 16 en queue de sapin par exemple sur sa paroi externe. L'insert 14 s'étend sur une longueur axiale qui correspond sensiblement à celle de la bague 5.

Sur la figure 1, l'écrou 7 et la bague 5 ont été successivement rapportés autour du conduit 1, sachant que la bague 5 peut pénétrer librement à l'intérieur de l'écrou 7 et le traverser tant que sa collerette 12 n'est pas en appui sur l'épaulement annulaire interne 10 de l'écrou 7.

Sur la figure 2, l'extrémité libre du conduit 1 a été engagée sur l'insert 14 jusqu'à venir sensiblement au contact de la collerette 15 de l'insert 14. L'engagement du conduit 1 sur l'insert 14 se fait légèrement à force de manière à élargir le diamètre externe du conduit 1 pour qu'il devienne supérieur au diamètre interne de la bague 5.

Lors de l'opération d'assemblage :
- le conduit 1 est axialement aligné avec l'embout 3,
- la collerette 15 de l'insert 14 vient en appui sur la face d'extrémité libre de l'embout 3, et
- l'écrou 7 est rapproché et vissé sur l'embout 3.

Dès que l'épaulement annulaire interne 10 de l'écrou 7 vient en appui sur la collerette 12 de la bague 5, l'écrou 7 entraîne la bague 5 et la force à s'engager sur l'insert 14 en provoquant une mise en compression de l'épaisseur du conduit 1 entre l'insert 14 et la bague 5 avec pénétration des nervures 16 dans l'épaisseur du conduit 1 pour renforcer l'accrochage mécanique qui est irréversible. La bague 5 est suffisamment rigide pour ne subir aucune déformation lors de l'opération de vissage.

La figure 3 illustre la fin de l'opération d'assemblage lorsque la face d'extrémité libre de l'embout 3 est venue sensiblement au contact de la collerette 12 de la bague 5. La collerette 12 de la bague 5 remplit deux fonctions, à savoir : une butée d'entraînement pour l'écrou 7, et une butée de fin d'entraînement lorsqu'elle vient en appui sur le conduit 3 à la fin de l'opération de vissage de l'écrou 7.

D'une manière générale, le procédé selon l'invention peut être mis en oeuvre quel que soit le diamètre des conduits 1. Cependant, ce procédé est notamment avantageux pour des conduits dont le diamètre interne se situe entre 12 et 30mm par exemple, ce qui est le cas dans de nombreuses applications. En effet, pour de tels diamètres, l'écrou 7 peut être facilement vissé avec une clé classique dont la manipulation ne pose pas de problème particulier pour un individu quelconque.

A titre d'exemple, la bague 5 peut s'étendre sur une longueur de l'ordre de 12mm et avec une épaisseur de l'ordre de 1 à 2mm.

Pour la mise en oeuvre du procédé, il n'y a pas à prévoir de moyen d'étanchéité entre le conduit 1 et la bague 5 d'une part, et entre le conduit 1 et l'insert 14 d'autre part.

Enfin, l'embout 3 sur lequel vient se raccorder le conduit 1 peut lui-même être raccordé sur un second conduit, c'est-à-dire que le procédé et le raccord selon l'invention peuvent être utilisés pour raccorder deux conduits entre eux.

L'invention peut s'appliquer à de nombreux domaines, en particulier celui du bâtiment pour réaliser les raccordements des conduits d'eau des sanitaires, par exemple.

## Revendications

1. Procédé d'assemblage d'un conduit (1) souple ou semi-rigide sur un embout tubulaire rigide (3) au moyen d'un écrou (7) vissé sur l'embout (3), ce procédé consistant à rapporter une bague métallique (5) autour du conduit (1), et à utiliser l'opération de vissage de l'écrou (7) sur l'embout (3) pour obtenir une solidarisation mécanique irréversible entre la bague (5) et le conduit (1), **caractérisé en ce qu'**il consiste à engager un insert (14) à queue de sapin à l'intérieur du conduit (1), à mettre l'insert (14) en appui sur l'embout (3), et à faire déplacer la bague (5) par l'écrou (7) au cours de l'opération de vissage pour la forcer à s'engager sur l'insert (14) en emprisonnant fermement le conduit (1) entre la bague (5) et l'insert (14), la bague (5) ne subissant aucune déformation lors du vissage de l'écrou (7).

2. Procédé d'assemblage selon la revendication 1, **caractérisé en ce qu'**il consiste à amener un épaulement annulaire interne (10) de l'écrou (7) en appui sur une collerette (12) de la bague (5), de manière à ce que l'écrou (7) déplace la bague (5) au cours de l'opération de vissage.

3. Raccord pour assembler un conduit (1) sur un embout tubulaire rigide (3) au moyen d'un écrou (7) vissé sur l'embout (3), **caractérisé en ce qu'**il comprend au moins une bague métallique (5) qui est rapportée sur le conduit (1) et solidarisée au conduit (1) selon un procédé d'assemblage tel que défini par la revendication 1 ou 2.

4. Raccord selon la revendication 3, **caractérisé en ce que** la bague (5) présente une collerette (12) vers une de ses extrémités pour servir de butée d'entraînement à l'écrou (7).

## Patentansprüche

1. Verfahren zur Anbringung einer flexiblen oder halbflexiblen Leitung (1) an einem rohrförmigen Ansatzstück (3) mittels einer auf das Ansatzstück (3) geschraubten Mutter (7), wobei das Verfahren darauf beruht, einen Metallring (5) auf die Leitung (1) aufzusetzen und den Schraubvorgang der Mutter (7) auf das Ansatzstück (3) zu verwenden, um eine irreversible mechanische Befestigung zwischen dem Ring (5) und der Leitung (1) zu erhalten,
**dadurch gekennzeichnet,**
**dass** es darauf beruht, einen Einsatz (14) mit Tannenbaumendstück im Inneren der Leitung (1) in Eingriff zu bringen, den Einsatz (14) in Anlehnung an das Einsatzstück (3) zu bringen und den Ring (5) mittels der Schraube (7) im Verlauf des Schraubvorgangs zu verschieben, um ihn dazu zu zwingen, auf dem Einsatz (14) in Eingriff zu kommen, während die Leitung (1) zwischen dem Ring (5) und dem Einsatz (14) fest umklammert wird, wobei der Ring (5) beim Schrauben der Mutter (7) keine Verformung erfährt.

2. Anbringungsverfahren nach Anspruch 1,
**dadurch gekennzeichnet,**
**dass** es darauf beruht, einen ringförmigen Innenabsatz (10) der Mutter (7) in Anlehnung an einen Kragen (12) des Rings (5) zu bringen, so dass die Schraube (7) den Ring (5) im Verlauf des Schraubvorgangs verschiebt.

3. Verbindung zum Anbringen einer Leitung (1) an einem festen Ansatzstück (3) mittels einer auf das Ansatzstück (3) geschraubten Mutter (7),
**dadurch gekennzeichnet,**
**dass** sie wenigstens einen Metallring (5) umfasst, welcher auf die Leitung (1) aufgesteckt und an der Leitung (1) gemäß einem Anbringungsverfahren, wie es durch Anspruch 1 oder 2 definiert ist, befestigt ist.

4. Verbindung nach Anspruch 3,
**dadurch gekennzeichnet,**
**dass** der Ring (5) einen Kragen (12) in Richtung eines seiner Enden aufweist, um für die Mutter (7) als Mitnahmeanschlag zu dienen.

## Claims

1. Method of mounting a flexible or semi-rigid conduit (1) on a rigid tubular endpiece (3) by means of a nut (7) screwed onto the endpiece (3), this method comprising fitting a metal ring (5) around the conduit (1) and using the operation of screwing the nut (7) onto the endpiece (3) to achieve an irreversible mechanical joint between the ring (5) and the conduit (1), **characterised in that** it comprises engaging a fir tree shaped insert (14) inside the conduit (1), bringing the insert (14) to bear on the endpiece (3) and moving the ring (5) by means of the nut (7) during the screwing operation, to force it to engage on the insert (14), thereby firmly trapping the conduit (1) between the ring (5) and the insert (14), the ring (5) not being subjected to any deformation during the tightening of the nut (7).

2. Mounting method according to claim 1, **characterised in that** it comprises bringing an inner annular shoulder (10) of the nut (7) to bear on a flange (12) of the ring (5), so that the nut (7) moves the ring (5) during the tightening operation.

3. Connector for mounting a conduit (1) on a rigid tubular endpiece (3) by means of a nut (7) screwed onto the endpiece (3), **characterised in that** it comprises at least one metal ring (5) which is fitted onto the conduit (1) and secured to the conduit (1) by a method of mounting as defined in claim 1 or 2.

4. Connector according to claim 3, **characterised in that** the ring (5) has a flange (12) towards one of its ends to act as a drive abutment for the nut (7).
